# EUROPÄISCHE PATENTSCHRIFT

(11) **EP 4 620 158 B1**
(45) Veröffentlichungstag und Bekanntmachung des Hinweises auf die Patenterteilung: **15.07.2026**
(21) Anmeldenummer: 23828693.4
(22) Anmeldetag: 07.12.2023
(51) Int. Cl.: H04L 9/40, G05B 19/042, G06F 21/53, G05B 19/00

(54) **VERFAHREN ZUM BETRIEB EINES AUTOMATISIERUNGSGERÄTS, SYSTEM UND STEUERUNGSPROGRAMM**
METHOD FOR OPERATING AN AUTOMATION DEVICE, SYSTEM AND CONTROL PROGRAM
PROCÉDÉ DE FONCTIONNEMENT D'UN APPAREIL D'AUTOMATISATION, SYSTÈME ET PROGRAMME DE COMMANDE

(30) Priorität: 29.12.2022 EP 22217198
(43) Veröffentlichungstag der Anmeldung: 24.09.2025
(73) Patentinhaber: Siemens Aktiengesellschaft, 80333 München (DE)
(72) Erfinder: HAASCH, Axel, 91056 Erlangen (DE); MÄNNER, Andres, 09236 Claußnitz OT Diethensdorf (DE)
(74) Vertreter: Siemens Patent Attorneys
(86) Internationale Anmeldenummer: PCT/EP2023/084761
(87) Internationale Veröffentlichungsnummer: WO 2024/141241

(56) Entgegenhaltungen:
- EP-A1- 3 843 332
- EP-A2- 2 846 208
- US-A1- 2017 214 717
- US-A1- 2018 316 729
- US-A1- 2022 404 804

## Beschreibung

Die vorliegende Erfindung betrifft ein Verfahren zum Betrieb eines Automatisierungsgeräts, insbesondere einer Produktions- oder Werkzeugmaschine, sowie ein System und ein Steuerungsprogramm zur Durchführung dieses Verfahrens.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Aus EP 3 650 968 A1 ist ein Verfahren zum Betrieb einer Produktions- oder Werkzeugmaschine bekannt, bei dem eine zumindest einen virtuellen Container umfassenden App zusammen mit einer App-Konfiguration aus einem entfernten Speicher in einen Speicher der Produktions- oder Werkzeugmaschine heruntergeladen wird. Dabei wird ein unmittelbarer Start der heruntergeladenen App auf der Produktions- oder Werkzeugmaschine verhindert. Zunächst wird die App-Konfiguration der heruntergeladenen App automatisch modifiziert. Hierzu werden von der App-Konfiguration umfasste Bezeichner ausgewertet und mit von einer Positivliste bzw. einer Negativliste umfassten Bezeichnern verglichen. Ein weder in der Positivliste noch in der Negativliste enthaltener Bezeichner wird durch einen automatisch ausgewählten oder automatisch generierten Zielausdruck ersetzt. Nach dem Modifizieren der App-Konfiguration wird die heruntergeladene App automatisch gestartet.

In EP 3 975 502 A1 ist ein Verfahren zur Bereitstellung von zeitkritischen Diensten mittels einer Ablaufsteuerungsumgebung beschrieben, bei dem für jeden Dienst jeweils zumindest eine Server-Komponente vorgesehen ist, die durch eine in die Ablaufsteuerungsumgebung ladbare und dort ausführbare Ablaufsteuerungskomponente gebildet wird. Eine Konfigurationseinheit für zumindest eine Gateway-Komponente eines die Ablaufsteuerungsumgebung umfassenden Teilnetzes ermittelt jeweils zu innerhalb des Teilnetzes gültigen Adressierungsinformationen der Server-Komponenten zugeordnete global gültige Zugangsinformationen. In Abhängigkeit von einem mittels der Konfigurationseinheit vorgegebenen Betriebsmodus werden eine oder mehrere parallel bzw. seriell verbundene Gateway-Komponenten verwendet. Die zumindest eine Gateway-Komponente leitet Dienstzugriffsanfragen entsprechend Weiterleitungs- bzw. Filterregeln, welche die Zugangsinformationen abbilden, und dem Betriebsmodus an die Server-Komponenten weiter.

Aus der älteren internationalen Patentanmeldung mit dem Anmeldeaktenzeichen PCT/EP2023/061952 ist ein Verfahren zur Bereitstellung von Steuerungsanwendungen mittels Ablaufsteuerungskomponenten für Steuerungsanwendungen bekannt, deren Ausführung ausgewählte Privilegien erfordert. Hierzu wird jeweils eine Spezifikation benötigter sicherheitskritischer Ressourcen erstellt. Anhand der Spezifikationen wird jeweils eine zusätzliche Ablaufsteuerungskomponente ermittelt, die für eine Bereitstellung eines Zugriffs auf die benötigten sicherheitskritischen Ressourcen vorgesehen ist. Dementsprechend wird eine Ausführung der jeweiligen Ablaufsteuerungskomponente gemeinsam mit der zusätzlichen Ablaufsteuerungskomponente gestartet. Durch eine Ablaufsteuerungsumgebung wird eine Schnittstelle zur Interprozesskommunikation zwischen der jeweiligen Ablaufsteuerungskomponente und der zusätzlichen Ablaufsteuerungskomponente eingerichtet. Der Zugriff auf die jeweils benötigten sicherheitskritischen Ressourcen wird mittels Interprozesskommunikation zwischen der jeweiligen Ablaufsteuerungskomponente und der zusätzlichen Ablaufsteuerungskomponente bereitgestellt.

In der älteren europäischen Patentanmeldung mit dem Anmeldeaktenzeichen 22 215 322.3 ist ein Verfahren zum Betrieb einer Produktions- oder Werkzeugmaschine bekannt, die eine Steuerung zur Steuerung von Aktoren der Produktions- oder Werkzeugmaschine und zumindest eine App zur Bereitstellung von Zusatzfunktionalitäten für die Produktions- oder Werkzeugmaschine umfasst. Die App wird während des Betriebs der Produktions- oder Werkzeugmaschine durch ein externes App-Managementsystem verwaltet. Bei Vorliegen eines vordefinierten Betriebszustandes der Produktions- oder Werkzeugmaschine wird eine Verwaltungsmaßnahme des App-Managementsystems in Bezug auf die App verhindert.

Aus US 2017/214717 A1 ist ein modellbasiertes Konfigurationssystem für Industriesicherheitsrichtlinien bekannt, das eine anlagenweite Sicherheitsrichtlinie für Industrieanlagen gemäß den von einem Benutzer bereitgestellten Sicherheitsrichtliniendefinitionen implementiert. Das Konfigurationssystem modelliert die Sammlung industrieller Anlagen, für die verschiedene Sicherheitsrichtlinien implementiert werden sollen. Über eine Schnittstelle kann der Benutzer Sicherheitsrichtlinien für eine Anlagenumgebung auf hoher Ebene definieren, indem er die Industrieanlagen in Sicherheitszonen gruppiert und zusätzliche Kommunikationsberechtigungen in Bezug auf Asset-to-Asset, Asset-to-Zone oder Zone-to-Zonen-Verbindungen definiert. Basierend auf dem Modell und diesen Richtliniendefinitionen generiert das System Sicherheitseinstellungsanweisungen auf Anlagenebene. Diese Sicherheitseinstellungsanweisungen sind so konfiguriert, dass geeignete Sicherheitseinstellungen für eine oder mehrere der Industrieanlagen festgelegt werden.

US 2018/316729 A1 betrifft ein System zur Bereitstellung einer zentralen Verwaltung eines Systems für softwaredefinierte Automatisierung ("SDA"). Das SDA-System umfasst eine Sammlung von Steuerungsknoten und eine logisch zentralisierte, jedoch physisch verteilte Sammlung von Rechenknoten, wobei die Aktivitäten der Rechenknoten überwacht werden. Eine oder mehrere Komponenten des Systems überwachen die Ausführungs-, Netzwerk- und Sicherheitsumgebungen des Systems, um ein Ereignis in einer ersten Umgebung zu erkennen. Als Reaktion auf das erkannte Ereignis wird mindestens eine Komponente in der ersten Umgebung wiederhergestellt, wobei die Wiederherstellung der ersten Umgebung einen Auslöser erzeugt, der die Wiederherstellung mindestens einer Komponente in jeweils einer zweiten und einer dritten Umgebung veranlasst.

Entsprechend EP 3 843 332 A1 werden Zur Überwachung von Datenverkehr in einem Kommunikationsnetz, über das Steuerungsanwendungen mittels Ablaufsteuerungskomponenten, für deren Nutzung erste Zugriffsrechte überprüft werden, bereitgestellt werden, gibt eine Zugriffssteuerungseinrichtung durch die Ablaufsteuerungskomponenten genutzte Kommunikationsnetz-Schnittstellen zum Zugriff frei und überprüft hierfür zweite Zugriffsrechte zur Nutzung der Kommunikationsnetz-Schnittstellen. Bei einer Anfrage eines Benutzers zur Überwachung von Datenverkehr, der von einer ausgewählten Steuerungsanwendung ausgeht bzw. dort terminiert, fragt die Zugriffssteuerungseinrichtung von einer Überwachungseinrichtung erste Zugriffsrechte des Benutzers zur Nutzung der ausgewählten Steuerungsanwendung ab. In Abhängigkeit der von der Überwachungseinrichtung abgefragten ersten Zugriffsrechte räumt die Zugriffssteuerungseinrichtung für die angefragte Überwachung des Datenverkehrs zweite Zugriffsrechte zur Nutzung der Kommunikationsnetz-Schnittstellen ein, die der ausgewählten Steuerungsanwendung zugeordnet sind.

Aufgrund einer zunehmend flexibleren funktionalen Ausgestaltung von industriellen Automatisierungsgeräten werden verstärkt in Automatisierungsgeräte nachladbare Steuerungsanwendungen genutzt. Diese Steuerungsanwendungen können beispielsweise mittels Container-Virtualisierung verfügbar gemacht werden. In industriellen Automatisierungssystem bestehen üblicherweise hohe Anforderungen hinsichtlich einer aufwandsarmen und funktional sicheren Integration industrieller Steuerungsanwendungen.

In industriellen Automatisierungssystemen ist es äußerst wichtig, zweifelsfrei feststellen zu können, ob Automatisierungsgeräte einem herstellerseitig vorgesehenen Zustand entsprechen oder infolge durch Anlagenbetreiber nachträglich installierter Steuerungsanwendungen Informations- oder Betriebssicherheitsrisiken darstellen. Insbesondere gilt es, unzulässige Änderungen an Software bzw. Firmware ausschließen zu können. Dies muss auch dann gewährleistet sein, wenn Anlagenbetreiber vollumfängliche Zugriffsrechte für die Automatisierungsgerät haben, herstellerseitig dagegen keine oder nur eingeschränkte Zugriffsmöglichkeiten bestehen.

*Unabhängig vom grammatikalischen Geschlecht eines bestimmten Begriffes sind Personen mit männlicher, weiblicher oder anderer Geschlechteridentität mit umfasst.*

Der vorliegenden Erfindung liegt die Aufgabe zugrunde, ein gegenüber Manipulationen sicheres, aufwandsarm realisierbares Verfahren zum Betrieb eines Automatisierungsgeräts, für das Steuerungsanwendungen insbesondere mittels Container-Virtualisierung bereitgestellt werden, zu schaffen sowie eine geeignete Implementierung zur Durchführung des Verfahrens anzugeben.

Diese Aufgabe wird erfindungsgemäß durch ein Verfahren mit den in Anspruch 1 angegebenen Merkmalen, durch ein System mit den in Anspruch 11 angegebenen Merkmalen und durch ein Steuerungsprogramm mit den in Anspruch 12 angegebenen Merkmalen gelöst. Vorteilhafte Weiterbildungen sind in den abhängigen Ansprüchen angegeben.

Entsprechend dem erfindungsgemäßen Verfahren zum Betrieb eines Automatisierungsgeräts werden durch eine mit dem Automatisierungsgerät verbundene Rechnereinrichtung Steuerungsanwendungen für das Automatisierungsgerät mittels Ablaufsteuerungskomponenten bereitgestellt. Die Ablaufsteuerungskomponenten werden in eine auf der Rechnereinrichtung installierte Ablaufsteuerungsumgebung geladen und dort ausgeführt. Für die Ablaufsteuerungskomponenten sind jeweils Konfigurationsinformationen vorgegeben, die zumindest für die jeweilige Ablaufsteuerungskomponente angeforderte Berechtigungen bzw. Ressourcen umfassen. Die angeforderten Berechtigungen bzw. Ressourcen können beispielsweise Dateisystem- bzw. Firewall-Freigaben umfassen.

Mittels der Steuerungsanwendungen werden vorteilhafterweise Funktionen des Automatisierungsgeräts bereitgestellt bzw. gesteuert. Hierzu zählen insbesondere eine Erfassung, Aggregierung und Vorverarbeitung von Prozess- oder Maschinendaten sowie deren Weiterleitung an Cloud-Rechnersysteme für weitergehende Analysen. Erfindungsgemäß laufen die Ablaufsteuerungskomponenten innerhalb der Ablaufsteuerungsumgebung isoliert voneinander ab und nutzen gemeinsam einen Betriebssystemkern der Rechnereinrichtung. Dabei ist die Ablaufsteuerungsumgebung auf einem Betriebssystem der Rechnereinrichtung installiert.

Insbesondere können die Ablaufsteuerungskomponenten Software-Container, WebAssembly- oder Java Bytecode sein bzw. umfassen. Darüber hinaus können die Ablaufsteuerungskomponenten auch Container-Gruppen umfassen, beispielsweise Pods. Grundsätzlich können für die Ablaufsteuerungskomponenten auch alternative Micro-Virtualisierungskonzepte, wie Snaps, verwendet werden. Speicherabbilder für Software-Container können beispielsweise aus einem durch eine Vielzahl von Nutzern lesend bzw. schreibend zugreifbaren Speicher- und Bereitstellungssystem abgerufen werden.

Die Ablaufsteuerungsumgebung kann insbesondere eine Container-Laufzeitumgebung bzw. Container-Engine sein, durch die ein Anlegen, Löschen bzw. Verknüpfen von virtuellen Ressourcen erfolgt. Dabei umfassen die virtuellen Ressourcen Software-Container, virtuelle Kommunikationsnetze und diesen zugeordnete Verbindungen. Beispielsweise kann die Ablaufsteuerungsumgebung eine Docker Engine oder einen Snap Core umfassen, die bzw. der auf einer Server-Einrichtung abläuft. Grundsätzlich können auch andere (orchestrierte) Container-Laufzeitumgebungen, wie podman oder Kubernetes, verwendet werden. Alternativ zu einer Container-Laufzeitumgebung kann für die Ablaufsteuerungsumgebung auch eine WebAssembly-Laufzeitumgebung oder eine Java Virtual Machine verwendet werden.

Im Automatisierungsgerät ist erfindungsgemäß eine Sicherheitsrichtlinie gespeichert, die nur nach einer erfolgreichen Authentifizierung anhand eines einem Hersteller des Automatisierungsgeräts zugeordneten Berechtigungsnachweises geändert wird. Der dem Hersteller des Automatisierungsgeräts zugeordnete Berechtigungsnachweis kann beispielsweise zumindest einen kryptographischen Hardware- bzw. Software-Schlüssel umfassen. Erfindungsgemäß werden die Konfigurationsinformationen durch die Rechnereinrichtung vor einem Start der jeweiligen Ablaufsteuerungskomponente gegen die Sicherheitsrichtlinie geprüft bzw. entsprechend der Sicherheitsrichtlinie angepasst. Die Ablaufsteuerungskomponenten werden jeweils entsprechend den geprüften bzw. angepassten Konfigurationsinformationen in die Ablaufsteuerungsumgebung geladen und dort ausgeführt. Vorzugsweise werden die geprüften bzw. angepassten Konfigurationsinformationen jeweils für ein Laden bzw. eine Ausführung der jeweiligen Ablaufsteuerungskomponente verwendet.

Die vorliegende Erfindung ermöglicht eine sichere Integration von Cloud bzw. Edge Computing-Konzepten in Automatisierungsgeräte, insbesondere komplexe Werkzeugmaschinen, indem Steuerungs- bzw. Zusatzfunktionen entsprechend einer auf dem jeweiligen Automatisierungsgerät gespeicherten Sicherheitsrichtlinie bereitgestellt werden, die grundsätzlich nur mit herstellerseitiger Autorisierung änderbar ist. Speziell bei bestehenden Automatisierungsgeräten können Steuerungs- bzw. Zusatzfunktionen im Rahmen von Sicherheitsrichtlinien mittels einer mit dem jeweiligen Automatisierungsgerät verbundenen Rechnereinrichtung betreiberseitig flexibel ergänzt werden.

Vorteilhafterweise wird anhand der geprüften bzw. angepassten Konfigurationsinformationen jeweils ein Berechtigungsprofil für einen Zugriff auf die angeforderten Berechtigungen bzw. Ressourcen erstellt oder referenziert. Durch die Berechtigungsprofile werden hinsichtlich der angeforderten Berechtigungen bzw. Ressourcen jeweils zulässige bzw. unzulässige Operationen in der Rechnereinrichtung festgelegt. Auf diese Weise kann insbesondere ein rollenbasierter Zugriffsschutz effizient und zuverlässig realisiert werden.

Entsprechend einer bevorzugten Ausgestaltung der vorliegenden Erfindung wird den Ablaufsteuerungskomponenten ohne Prüfung der jeweiligen Konfigurationsinformationen gegen die im Automatisierungsgerät gespeicherte Sicherheitsrichtlinie zumindest kein Zugriff auf das Automatisierungsgerät bzw. kein Kommunikationsnetz-Zugriff eingeräumt. Darüber hinaus werden für ein Laden bzw. eine Ausführung von Ablaufsteuerungskomponenten verwendete Konfigurationsinformationen nach einer Änderung der im Automatisierungsgerät gespeicherten Sicherheitsrichtlinie vorteilhafterweise erneut gegen die Änderungen geprüft bzw. entsprechend den Änderungen angepasst. Dabei werden von der Änderung der Sicherheitsrichtlinie betroffene Ablaufsteuerungskomponenten selektiv gestoppt und mit den erneut geprüften bzw. angepassten Konfigurationsinformationen wieder gestartet. Somit ist einerseits ein flexibler Betrieb des Automatisierungsgeräts durch Anpassung der Sicherheitsrichtlinie möglich. Andererseits ist eine konsistente, zielgerichtete Anwendung einer geänderten Sicherheitsrichtlinie gewährleistet.

Entsprechend einer bevorzugten Ausführungsform der vorliegenden Erfindung erfasst ein einem Betreiber des Automatisierungsgeräts zugeordnetes Orchestrierungssystem ein Anlegen, ein Löschen bzw. eine Änderung der Ablaufsteuerungskomponenten und registriert die Steuerungsanwendungen mit ihrem jeweiligen Ausführungsstatus. Insbesondere umfasst das Anlegen, das Löschen bzw. die Änderung der Ablaufsteuerungskomponenten jeweils ein Allokieren oder Freigeben von Ressourcen der Rechnereinrichtung. Dies ermöglicht eine besonders effiziente und zuverlässige Verwaltung der Steuerungsanwendungen.

Das erfindungsgemäße Steuerungsprogramm wird in einen Arbeitsspeicher einer Rechnereinrichtung geladen sowie durch einen Prozessor der Rechnereinrichtung verarbeitet und weist einen Code auf, bei dessen Ausführung vorangehend beschriebene Verfahrensschritte ausgeführt werden, während das Steuerungsprogramm in der Rechnereinrichtung abläuft.

Das erfindungsgemäße System ist zur Durchführung eines Verfahrens entsprechend vorangehenden Ausführungen vorgesehen und umfasst zumindest ein Automatisierungsgerät, zumindest eine mit dem Automatisierungsgerät verbundene Rechnereinrichtung sowie eine auf der Rechnereinrichtung installierte Ablaufsteuerungsumgebung. Außerdem ist eine im Automatisierungsgerät gespeicherte Sicherheitsrichtlinie vorgesehen, die nur nach einer erfolgreichen Authentifizierung anhand eines einem Hersteller des Automatisierungsgeräts zugeordneten Berechtigungsnachweises geändert wird.

Die Rechnereinrichtung des erfindungsgemäßen Systems ist dafür ausgestaltet und eingerichtet, Steuerungsanwendungen für das Automatisierungsgerät mittels Ablaufsteuerungskomponenten bereitzustellen, die in die Ablaufsteuerungsumgebung ladbar und dort ausführbar sind. Dabei sind für die Ablaufsteuerungskomponenten jeweils Konfigurationsinformationen vorgegeben, die zumindest für die jeweilige Ablaufsteuerungskomponente angeforderte Berechtigungen bzw. Ressourcen umfassen.

Die Ablaufsteuerungskomponenten laufen innerhalb der Ablaufsteuerungsumgebung isoliert voneinander ab und nutzen gemeinsam einen Betriebssystemkern der Rechnereinrichtung. Ferner ist die Rechnereinrichtung dafür ausgestaltet und eingerichtet, die Konfigurationsinformationen vor einem Start der jeweiligen Ablaufsteuerungskomponente gegen die Sicherheitsrichtlinie zu prüfen bzw. entsprechend der Sicherheitsrichtlinie anzupassen. Dementsprechend ist die Rechnereinrichtung zusätzlich dafür ausgestaltet und eingerichtet, die Ablaufsteuerungskomponenten jeweils entsprechend den geprüften bzw. angepassten Konfigurationsinformationen in die Ablaufsteuerungsumgebung zu laden und dort auszuführen.

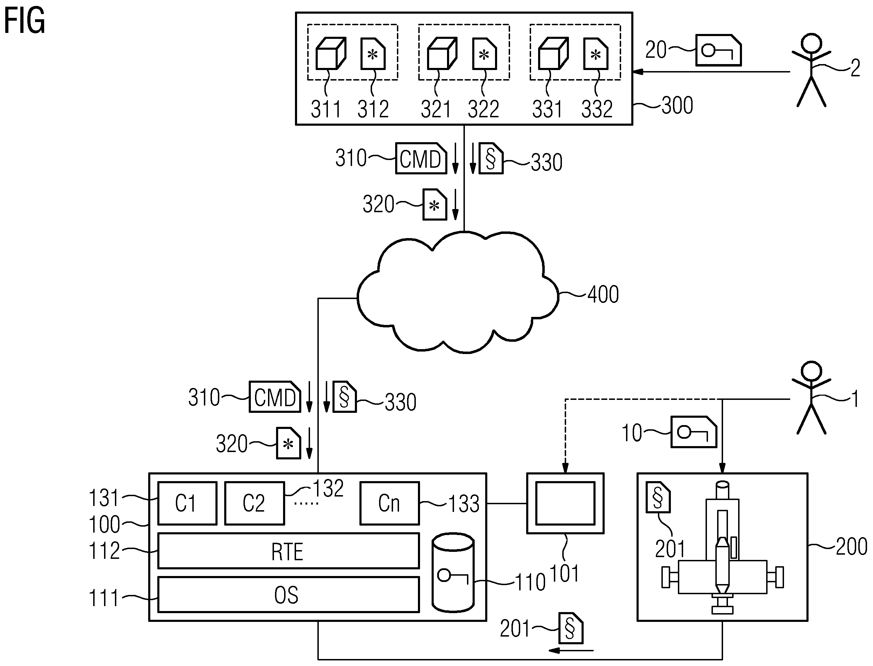

Die vorliegende Erfindung wird nachfolgend an einem Ausführungsbeispiel anhand der Zeichnung näher erläutert. Es zeigt die
- Figur: ein System mit einem Automatisierungsgerät und einer Rechnereinrichtung zur Bereitstellung von Steuerungsanwendungen für das Automatisierungsgerät.

Das in der Figur dargestellte System umfasst eine Rechnereinrichtung 100 zur Bereitstellung von Steuerungsanwendungen eines industriellen Automatisierungssystems mittels Ablaufsteuerungskomponenten 131-133, die im vorliegenden Ausführungsbeispiel durch Software-Container implementiert sind. Die Steuerungsanwendungen des industriellen Automatisierungssystems sind exemplarisch für zeitkritische Dienste und können auch Überwachungsfunktionen umfassen.

Die Rechnereinrichtung 100 kann mittels der Steuerungsanwendungen beispielsweise Funktionen von Automatisierungsgeräten, wie Produktions- oder Werkzeugmaschinen oder speicherprogrammierbaren Steuerungen, oder von Feldgeräten, wie Sensoren oder Aktoren, implementieren. Auf diese Weise kann die Rechnereinrichtung 100 insbesondere für einen Austausch von Steuerungs- und Messgrößen mit einer Produktions- oder Werkzeugmaschine 200 genutzt werden, mit der die Rechnereinrichtung 100 verbunden ist.

Alternativ oder zusätzlich kann die Rechnereinrichtung 100 als Edge Box oder Cloud Connector für das Automatisierungsgerät 200 dienen. In diesem Fall übernimmt die Rechnereinrichtung 100 beispielsweise eine Erfassung, Aggregierung bzw. Vorverarbeitung von Prozess- oder Maschinendaten und sendet diese an ein Cloud-Rechnersystem für weitergehende Analysen. Im Automatisierungsgerät 200 ist eine herstellerseitige Sicherheitsrichtlinie 201 gespeichert, die nur nach einer erfolgreichen Authentifizierung anhand eines einem Hersteller 1 des Automatisierungsgeräts 200 zugeordneten Berechtigungsnachweises 10 geändert wird. Der dem Hersteller 1 des Automatisierungsgeräts 200 zugeordnete Berechtigungsnachweis 10 umfasst beispielsweise einen kryptographischen Hardware- bzw. Software-Schlüssel. Durch die herstellerseitige Sicherheitsrichtlinie 201 werden insbesondere Zugriffsrechte und zulässige bzw. unzulässige Operationen in Bezug auf das Automatisierungsgerät 200 festgelegt.

Darüber hinaus kann die Rechnereinrichtung 100 mittels der Steuerungsanwendungen Funktionen einer Bedien- und Beobachtungsstation implementieren und somit zur Visualisierung von Prozessdaten bzw. Mess- und Steuerungsgrößen genutzt werden, die durch Automatisierungsgeräte verarbeitet bzw. erfasst werden. Insbesondere kann die Rechnereinrichtung 100 zur Anzeige von Werten eines Regelungskreises und zur Veränderung von Regelungsparametern oder -programmen verwendet werden. Hierzu umfasst die Rechnereinrichtung 100 im vorliegenden Ausführungsbeispiel eine Anzeigeeinheit 101.

Außerdem umfasst das in der Figur dargestellte System ein Orchestrierungssystem 300, das ein Anlegen, ein Löschen bzw. eine Änderung der Ablaufsteuerungskomponenten erfasst und die Steuerungsanwendungen mit ihrem jeweiligen Ausführungsstatus registriert. Hierzu stellt das Orchestrierungssystem 300 für Steuerungsanwendungen jeweils zumindest ein Speicherabbild (Image) 311, 321, 331 für einen Software-Container sowie zugehörige Konfigurationsinformationen 312, 322, 332 insbesondere an die Rechnereinrichtung 100 bereit. Die Konfigurationsinformationen 312, 322, 332 umfassen insbesondere für die jeweilige Ablaufsteuerungskomponente angeforderte Berechtigungen bzw. Ressourcen. Die angeforderten Berechtigungen bzw. Ressourcen können beispielsweise Dateisystem- oder Firewall-Freigaben betreffen.

Vorzugsweise ist ein Orchestrierungssystem 300 für mehrere Rechnereinrichtungen vorgesehen, die mittels Software-Containern Steuerungsanwendungen bereitstellen. Das Orchestrierungssystem 300 ist entsprechend der Figur über ein Ethernetbasiertes Kommunikationsnetz 400 mit der Rechnereinrichtung 100 verbunden und einem Betreiber 2 des industriellen Automatisierungssystems zugeordnet. Für einen Zugriff auf das Orchestrierungssystem 300 bzw. auf diesem zugeordnete Rechnereinrichtungen ist im vorliegenden Ausführungsbeispiel betreiberseitig ein entsprechender Berechtigungsnachweis 20 erforderlich.

Das Anlegen, das Löschen bzw. die Änderung der Ablaufsteuerungskomponenten umfasst jeweils ein Allokieren oder Freigeben von Ressourcen der Rechnereinrichtung 100. Dies wird mittels an die Rechnereinrichtung 100 übermittelter Steuerungsbefehle 310 und Konfigurationsinformationen 320 durch das Orchestrierungssystem 300 gesteuert. Zusätzlich können vom Orchestrierungssystem 300 optionale betreiberseitige Sicherheitsrichtlinien 330 an die dem Orchestrierungssystem 300 zugeordneten Rechnereinrichtungen zur Umsetzung verteilt werden. Die Konfigurationsinformationen 320 sind vorzugsweise Deployment-Informationen, beispielsweise docker-compose.yml-Konfigurationsdateien. Insbesondere umfassen die Konfigurationsinformationen 320 jeweils zusätzlich zu einer Angabe eines Speicherabbilds für den jeweiligen Software-Container sowie den angeforderten Berechtigungen bzw. Ressourcen anwendungsspezifische Vorgaben.

Anhand von Signaturen für die Speicherabbilder 311, 321, 331 und für die Konfigurationsinformationen 312, 322, 332 wird vorzugsweise eine Authentizität der Speicherabbilder 311, 321, 331 und Konfigurationsinformationen 312, 322, 332 überprüft, beispielsweise durch den Betreiber 2 des industriellen Automatisierungssystems oder automatisch durch das Orchestrierungssystem 300. Darüber hinaus kann überprüft werden, dass innerhalb der Speicherabbilder 311, 321, 331 bzw. Konfigurationsinformationen 312, 322, 332 abhängig von der jeweiligen Signatur nur definierte bzw. zulässige Parameter gesetzt sind. Dementsprechend werden nicht-konforme Speicherabbilder 311, 321, 331 bzw. Konfigurationsinformationen 312, 322, 332 nicht für eine Verwendung zugelassen.

Auf einem Betriebssystem 111 der Rechnereinrichtung 100 ist eine Ablaufsteuerungsumgebung 112 als Betriebssystem-Anwendung installiert. Die Software-Container bzw. Ablaufsteuerungskomponenten 131-133 können in diese Ablaufsteuerungsumgebung 112 geladen und dort ausgeführt werden. Grundsätzlich können Ablaufsteuerungskomponenten 131-133 jeweils von der Rechnereinrichtung 100 auf einen anderen Host zur dortigen Ausführung migriert bzw. auf mehreren Hosts zeitgleich ausgeführt werden.

Im vorliegenden Ausführungsbeispiel laufen die Software-Container jeweils von anderen Software-Containern, Container-Gruppen bzw. Pods isoliert innerhalb der Ablaufsteuerungsumgebung 112 auf dem Betriebssystem 111 der Rechnereinrichtung 100 ab. Dabei nutzen die Software-Container jeweils gemeinsam mit anderen auf der Rechnereinrichtung 100 ablaufenden Software-Containern einen bzw. denselben Kernel des Betriebssystems 111. Die Ablaufsteuerungsumgebung 112 ist vorzugsweise eine Container-Laufzeitumgebung bzw. Container-Engine. Alternativ zu Software-Containern können die Ablaufsteuerungskomponenten beispielsweise WebAssembly- oder Java Bytecode sein. In diesem Fall ist die Ablaufsteuerungsumgebung 112 eine WebAssembly-Laufzeitumgebung oder eine Java Virtual Machine.

Eine Isolation der Software-Container bzw. eine Isolation von ausgewählten Betriebssystemmitteln untereinander kann insbesondere mittels Control Groups und Namespaces realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden, indem Ressourcen des Kernels des Betriebssystems virtualisiert werden.

Die Ablaufsteuerungskomponenten 131-133 werden vorzugsweise durch das Orchestrierungssystem 300 anhand der Konfigurationsinformationen 312, 322, 332 insbesondere hinsichtlich der jeweils angeforderten Berechtigungen bzw. Ressourcen klassifiziert. In Abhängigkeit einer solchen Klassifizierung kann beispielsweise die für die jeweilige Ablaufsteuerungskomponente 131-133 anzuwendende betreiberseitige Sicherheitsrichtlinie 330 ausgewählt werden. Mögliche weitere Aspekte für die Klassifizierung können
- Signaturen von Deployment-Informationen oder Images,
- eine Bereitstellung von definierten Verzeichnissen oder Dateien eines Hosts an eine Instanz einer Ablaufsteuerungskomponente im Rahmen eines Mount-Vorgangs bei einem Start der Instanz,
- in Deployment-Informationen oder Images zugewiesene Labels, Prozessprivilegien bzw. Namespaces, insbesondere Namespaces, die mit einem Host oder anderen Containern geteilt werden,
sein. Klassifizierungskriterien können grundsätzlich in beliebiger Form miteinander verknüpft werden. Im vorliegenden Ausführungsbeispiel werden die jeweils anzuwendenden betreiberseitigen Sicherheitsrichtlinien 330 in einer Datenbank 110 der Rechnereinrichtung 100 gespeichert und können beispielsweise durch den Hersteller 1 des Automatisierungsgeräts 200 über die Anzeigeeinheit 101 oder eine Remote Terminal-Sitzung kontrolliert werden.

Die vom Orchestrierungssystem 300 übermittelten Konfigurationsinformationen 320 werden durch die Rechnereinrichtung 100 vor einem Start der jeweiligen Ablaufsteuerungskomponente 131-133 gegen die im Automatisierungsgerät 200 gespeicherte herstellerseitige Sicherheitsrichtlinie 201 geprüft bzw. entsprechend dieser Sicherheitsrichtlinie 201 angepasst. Dementsprechend werden die Ablaufsteuerungskomponenten 131-133 jeweils entsprechend den geprüften bzw. angepassten Konfigurationsinformationen in die Ablaufsteuerungsumgebung 112 geladen und dort ausgeführt. Insbesondere werden die geprüften bzw. angepassten Konfigurationsinformationen jeweils für ein Laden bzw. eine Ausführung der jeweiligen Ablaufsteuerungskomponente 131-133 verwendet. Ohne Prüfung der jeweiligen Konfigurationsinformationen 320 gegen die im Automatisierungsgerät 200 gespeicherte herstellerseitige Sicherheitsrichtlinie 201 wird den Ablaufsteuerungskomponenten 131-133 vorzugsweise zumindest kein Zugriff auf das Automatisierungsgerät 200 und das Kommunikationsnetz 400 eingeräumt.

Nach einer Änderung der im Automatisierungsgerät 200 gespeicherten herstellerseitigen Sicherheitsrichtlinie 201 werden für das Laden bzw. die Ausführung der Ablaufsteuerungskomponenten 131-133 verwendete Konfigurationsinformationen erneut gegen die Änderungen vorteilhafterweise geprüft bzw. entsprechend den Änderungen angepasst. Von der Änderung der herstellerseitigen Sicherheitsrichtlinie 201 betroffene Ablaufsteuerungskomponenten werden dementsprechend selektiv gestoppt und mit den erneut geprüften bzw. angepassten Konfigurationsinformationen wieder gestartet.

Entsprechend einer besonders vorteilhaften Ausführungsvariante wird anhand der geprüften bzw. angepassten Konfigurationsinformationen jeweils ein Berechtigungsprofil für einen Zugriff auf die angeforderten Berechtigungen bzw. Ressourcen erstellt oder referenziert. Durch die Berechtigungsprofile werden hinsichtlich der angeforderten Berechtigungen bzw. Ressourcen jeweils zulässige bzw. unzulässige Operationen in der Rechnereinrichtung 100 festgelegt. Hierzu zählen beispielsweise auch Aufrufe über Anwendungsprogrammierschnittstellen. Für eine Referenzierung von vordefinierten Berechtigungsprofilen kann beispielsweise eine entsprechende, dem Orchestrierungssystem 300 zugeordnete Datenbasis vorgesehen werden, in der die vordefinierten Berechtigungsprofile kryptographisch gesichert hinterlegt sind.

## Patentansprüche

1. Verfahren zum Betrieb eines Automatisierungsgeräts, bei dem
- durch eine mit dem Automatisierungsgerät (200) verbundene Rechnereinrichtung (100) Steuerungsanwendungen für das Automatisierungsgerät mittels Ablaufsteuerungskomponenten (131-133) bereitgestellt werden, die in eine auf der Rechnereinrichtung installierte Ablaufsteuerungsumgebung (112) geladen und dort ausgeführt werden, wobei für die Ablaufsteuerungskomponenten jeweils Konfigurationsinformationen (312, 322, 332) vorgegeben sind, die zumindest für die jeweilige Ablaufsteuerungskomponente angeforderte Berechtigungen und/oder Ressourcen umfassen,
- die Ablaufsteuerungskomponenten (131-133) innerhalb der Ablaufsteuerungsumgebung (112) isoliert voneinander ablaufen und gemeinsam einen Betriebssystemkern der Rechnereinrichtung (100) nutzen und bei dem die Ablaufsteuerungsumgebung auf einem Betriebssystem (111) der Rechnereinrichtung installiert ist,
- im Automatisierungsgerät eine Sicherheitsrichtlinie (201) gespeichert ist, die nur nach einer erfolgreichen Authentifizierung anhand eines einem Hersteller (1) des Automatisierungsgeräts zugeordneten Berechtigungsnachweises (10) geändert wird,
- die Konfigurationsinformationen durch die Rechnereinrichtung vor einem Start der jeweiligen Ablaufsteuerungskomponente gegen die Sicherheitsrichtlinie geprüft und/oder entsprechend der Sicherheitsrichtlinie angepasst werden,
- die Ablaufsteuerungskomponenten jeweils entsprechend den geprüften und/oder angepassten Konfigurationsinformationen in die Ablaufsteuerungsumgebung geladen und dort ausgeführt werden.

2. Verfahren nach Anspruch 1,
bei dem anhand der geprüften und/oder angepassten Konfigurationsinformationen jeweils ein Berechtigungsprofil für einen Zugriff auf die angeforderten Berechtigungen und/oder Ressourcen erstellt oder referenziert wird und bei dem durch die Berechtigungsprofile hinsichtlich der angeforderten Berechtigungen und/oder Ressourcen jeweils zulässige und/oder unzulässige Operationen in der Rechnereinrichtung festgelegt werden.

3. Verfahren nach einem der Ansprüche 1 oder 2,
bei dem den Ablaufsteuerungskomponenten ohne Prüfung der jeweiligen Konfigurationsinformationen gegen die im Automatisierungsgerät gespeicherte Sicherheitsrichtlinie zumindest kein Zugriff auf das Automatisierungsgerät und/oder kein Kommunikationsnetz-Zugriff eingeräumt wird.

4. Verfahren nach einem der Ansprüche 1 bis 3,
bei dem die angeforderten Berechtigungen und/oder Ressourcen Dateisystem- und/oder Firewall-Freigaben umfassen.

5. Verfahren nach einem der Ansprüche 1 bis 4,
bei dem die geprüften und/oder angepassten Konfigurationsinformationen jeweils für ein Laden und/oder eine Ausführung der jeweiligen Ablaufsteuerungskomponente verwendet werden.

6. Verfahren nach einem der Ansprüche 1 bis 5,
bei dem die Ablaufsteuerungskomponenten Software-Container, WebAssembly- oder Java Bytecode sind und bei dem die Ablaufsteuerungsumgebung eine Container-Laufzeitumgebung, eine WebAssembly-Laufzeitumgebung oder eine Java Virtual Machine ist.

7. Verfahren nach einem der Ansprüche 1 bis 6,
bei dem ein einem Betreiber des Automatisierungsgeräts zugeordnetes Orchestrierungssystem (300) ein Anlegen, ein Löschen und/oder eine Änderung der Ablaufsteuerungskomponenten (131-133) erfasst und die Steuerungsanwendungen mit ihrem jeweiligen Ausführungsstatus registriert und bei dem das Anlegen, das Löschen und/oder die Änderung der Ablaufsteuerungskomponenten jeweils ein Allokieren oder Freigeben von Ressourcen der Rechnereinrichtung (100) umfasst.

8. Verfahren nach einem der Ansprüche 1 bis 7,
bei dem mittels der Steuerungsanwendungen Funktionen des Automatisierungsgeräts bereitgestellt und/oder gesteuert werden.

9. Verfahren nach einem der Ansprüche 1 bis 8,
bei dem der dem Hersteller des Automatisierungsgeräts zugeordnete Berechtigungsnachweis zumindest einen kryptographischen Hardware- und/oder Software-Schlüssel umfasst.

10. Verfahren nach einem der Ansprüche 1 bis 9,
bei dem für ein Laden und/oder eine Ausführung von Ablaufsteuerungskomponenten verwendete Konfigurationsinformationen nach einer Änderung der im Automatisierungsgerät gespeicherten Sicherheitsrichtlinie erneut gegen die Änderungen geprüft und/oder entsprechend den Änderungen angepasst werden und bei dem von der Änderung der Sicherheitsrichtlinie betroffene Ablaufsteuerungskomponenten selektiv gestoppt und mit den erneut geprüften und/oder angepassten Konfigurationsinformationen wieder gestartet werden.

11. System zur Durchführung eines Verfahrens nach einem der Ansprüche 1 bis 10 mit
- zumindest einem Automatisierungsgerät (200),
- zumindest einer mit dem Automatisierungsgerät verbundenen Rechnereinrichtung (100),
- einer auf der Rechnereinrichtung installierten Ablaufsteuerungsumgebung (112),
- einer im Automatisierungsgerät gespeicherten Sicherheitsrichtlinie (201), die nur nach einer erfolgreichen Authentifizierung anhand eines einem Hersteller (1) des Automatisierungsgeräts zugeordneten Berechtigungsnachweises (10) geändert wird,
- wobei Rechnereinrichtung dafür ausgestaltet und eingerichtet ist, Steuerungsanwendungen für das Automatisierungsgerät mittels Ablaufsteuerungskomponenten (131-133) bereitzustellen, die in die Ablaufsteuerungsumgebung geladen und dort ausgeführt werden, wobei für die Ablaufsteuerungskomponenten jeweils Konfigurationsinformationen (312, 322, 332) vorgegeben sind, die zumindest für die jeweilige Ablaufsteuerungskomponente angeforderte Berechtigungen und/oder Ressourcen umfassen,
- wobei die Ablaufsteuerungskomponenten (131-133) dafür ausgestaltet und eingerichtet sind, innerhalb der Ablaufsteuerungsumgebung (112) isoliert voneinander abzulaufen und gemeinsam einen Betriebssystemkern der Rechnereinrichtung (100) zu nutzen, wobei die Ablaufsteuerungsumgebung auf einem Betriebssystem (111) der Rechnereinrichtung installiert ist,
- wobei die Rechnereinrichtung ferner dafür ausgestaltet und eingerichtet ist, die Konfigurationsinformationen vor einem Start der jeweiligen Ablaufsteuerungskomponente gegen die Sicherheitsrichtlinie zu prüfen und/oder entsprechend der Sicherheitsrichtlinie anzupassen,
- wobei die Rechnereinrichtung ferner dafür ausgestaltet und eingerichtet ist, die Ablaufsteuerungskomponenten jeweils entsprechend den geprüften und/oder angepassten Konfigurationsinformationen in die Ablaufsteuerungsumgebung zu laden und dort auszuführen.

12. Steuerungsprogramm zur Durchführung eines Verfahrens nach einem der Ansprüche 1 bis 10, wobei das Steuerungsprogramm in einen Arbeitsspeicher einer Rechnereinrichtung geladen wird sowie durch einen Prozessor der Rechnereinrichtung verarbeitet wird und zumindest einen Code aufweist, bei dessen Ausführung
- Steuerungsanwendungen für ein mit der Rechnereinrichtung (100) verbundenes Automatisierungsgerät (200) mittels Ablaufsteuerungskomponenten (131-133) bereitgestellt werden, die in eine auf der Rechnereinrichtung installierte Ablaufsteuerungsumgebung (112) geladen und dort ausgeführt werden, wobei für die Ablaufsteuerungskomponenten jeweils Konfigurationsinformationen (312, 322, 332) vorgegeben sind, die zumindest für die jeweilige Ablaufsteuerungskomponente angeforderte Berechtigungen und/oder Ressourcen umfassen,
- die Ablaufsteuerungskomponenten (131-133) innerhalb der Ablaufsteuerungsumgebung (112) isoliert voneinander ablaufen und gemeinsam einen Betriebssystemkern der Rechnereinrichtung (100) nutzen, wobei die Ablaufsteuerungsumgebung auf einem Betriebssystem (111) der Rechnereinrichtung installiert ist,
- die Konfigurationsinformationen durch die Rechnereinrichtung vor einem Start der jeweiligen Ablaufsteuerungskomponente gegen eine im Automatisierungsgerät gespeicherte Sicherheitsrichtlinie (201) geprüft und/oder entsprechend der Sicherheitsrichtlinie angepasst werden, wobei die Sicherheitsrichtlinie nur nach einer erfolgreichen Authentifizierung anhand eines einem Hersteller (1) des Automatisierungsgeräts zugeordneten Berechtigungsnachweises (10) geändert wird,
- die Ablaufsteuerungskomponenten jeweils entsprechend den geprüften und/oder angepassten Konfigurationsinformationen in die Ablaufsteuerungsumgebung geladen und dort ausgeführt werden, während das Steuerungsprogramm in der Rechnereinrichtung abläuft.

## Claims

1. Method for operating an automation device, in which
- a computer facility (100) connected to the automation device (200) provides control applications for the automation device by way of sequence control components (131-133) that are loaded into a sequence control environment (112) installed on the computer facility and executed there, wherein configuration information (312, 322, 332) is specified for each of the sequence control components, said information at least including authorisations and/or resources requested for the respective sequence control component,
- the sequence control components (131-133) run in isolation from one another within the sequence control environment (112) and make joint use of an operating system kernel of the computer facility (100) and in which the sequence control environment is installed on an operating system (111) of the computer facility,
- the automation device contains a stored security policy (201) that is only modifiable after successful authentication using credentials (10) assigned to a manufacturer (1) of the automation device,
- the configuration information is checked against the security policy and/or is adapted in accordance with the security policy by the computer facility before the respective sequence control component is started,
- the sequence control components are each loaded into the sequence control environment in accordance with the checked and/or adapted configuration information and executed there.

2. Method according to claim 1,
in which an authorisation profile for access to the requested authorisations and/or resources is in each case created or referenced using the checked and/or adapted configuration information and in which the authorisation profiles in each case define admissible and/or inadmissible operations in the computer facility with regard to the requested authorisations and/or resources.

3. Method according to one of claims 1 or 2,
in which the sequence control components are at least granted no access to the automation device and/or no communications network access without the respective configuration information being checked against the security policy stored in the automation device.

4. Method according to one of claims 1 to 3,
in which the requested authorisations and/or resources include file system and/or firewall exceptions.

5. Method according to one of claims 1 to 4,
in which the checked and/or adapted configuration information is used in each case for loading and/or executing the respective sequence control component.

6. Method according to one of claims 1 to 5,
in which the sequence control components are software containers, WebAssembly bytecode, or Java bytecode and in which the sequence control environment is a container runtime environment, a WebAssembly runtime environment, or a Java virtual machine.

7. Method according to one of claims 1 to 6,
in which an orchestration system (300) assigned to an operator of the automation device acquires a creation, deletion, and/or modification of the sequence control components (131-133) and registers the control applications with their respective execution status and in which the creation, deletion, and/or modification of the sequence control components in each case involves allocating or enabling resources of the computer facility (100).

8. Method according to one of claims 1 to 7,
in which the control applications provide and/or control functions of the automation device.

9. Method according to one of claims 1 to 8,
in which the credentials assigned to the manufacturer of the automation device include at least one cryptographic hardware and/or software key.

10. Method according to one of claims 1 to 9,
in which configuration information used for loading and/or executing sequence control components is rechecked against the modifications after a modification of the security policy stored in the automation device and/or adapted in accordance with the modifications and in which the sequence control components affected by the modification of the security policy are selectively stopped and restarted with the rechecked and/or adapted configuration information.

11. System for carrying out a method according to one of claims 1 to 10 with
- at least one automation device (200),
- at least one computer facility (100) connected to the automation device,
- a sequence control environment (112) installed on the computer facility,
- an automation device containing a stored security policy (201) that is only modifiable after successful authentication using credentials (10) assigned to a manufacturer (1) of the automation device,
- wherein the computer facility is configured and set up to provide control applications for the automation device by way of sequence control components (131-133) that are loaded into the sequence control environment and executed there, wherein configuration information (312, 322, 332) is specified for each of the sequence control components, said information at least including authorisations and/or resources requested for the respective sequence control component,
- wherein the sequence control components (131-133) are configured and set up to run in isolation from one another within the sequence control environment (112) and to make joint use of an operating system kernel of the computer facility (100), wherein the sequence control environment is installed on an operating system (111) of the computer facility,
- wherein the computer facility is furthermore configured and set up to check the configuration information against the security policy and/or adapt it in accordance with the security policy before the respective sequence control component is started,
- wherein the computer facility is furthermore configured and set up to load the sequence control components into the sequence control environment in accordance with the checked and/or adapted configuration information and to execute them there.

12. Control program for carrying out a method according to one of claims 1 to 10, wherein the control program is loaded into a working memory of a computer facility and is processed by a processor of the computer facility and has at least one code, on the execution of which
- control applications for an automation device (200) connected to the computer facility (100) are provided by way of sequence control components (131-133) that are loaded into a sequence control environment (112) installed on the computer facility and executed there, wherein configuration information (312, 322, 332) is specified for each of the sequence control components, said information at least including authorisations and/or resources requested for the respective sequence control component,
- the sequence control components (131-133) run in isolation from one another within the sequence control environment (112) and make joint use of an operating system kernel of the computer facility (100), wherein the sequence control environment is installed on an operating system (111) of the computer facility,
- the configuration information is checked against a security policy (201) stored in the automation device and/or is adapted in accordance with the security policy by the computer facility before the respective sequence control component is started, wherein the security policy is only modifiable after successful authentication using credentials (10) assigned to a manufacturer (1) of the automation device,
- the sequence control components are each loaded into the sequence control environment in accordance with the checked and/or adapted configuration information and executed there,
while the control program is running in the computer facility.

## Revendications

1. Procédé pour faire fonctionner un appareil d'automatisation, dans lequel,
- par un dispositif (100) informatique relié à l'appareil (200) d'automatisation, on met des applications de commande à disposition de l'appareil d'automatisation au moyen de composants (131-133) de commande de déroulement, qui sont chargés dans un environnement (112) de commande de déroulement installé sur le dispositif informatique et y sont exécutés, dans lequel, pour les composants de commande de déroulement, sont prescrites respectivement des informations (312, 322, 332) de configuration, qui comprennent au moins des autorisations et/ou des ressources exigées pour le composant de commande de déroulement respectif,
- les composants (131-133) de commande de déroulement se déroulent à l'intérieur de l'environnement (112) de commande de déroulement d'une manière isolée les uns des autres et utilisent conjointement un noyau de système de fonctionnement du dispositif (100) informatique et dans lequel l'environnement de commande de déroulement est installé sur un système (111) de fonctionnement du dispositif informatique,
- il est mis en mémoire dans l'appareil d'automatisation une directive (201) de sécurité, qui n'est modifiée qu'après une authentification couronnée de succès à l'aide d'une preuve (10) d'autorisation associée à un fabricant (1) de l'appareil d'automatisation,
- les informations de configuration sont contrôlées par rapport à la directive de sécurité par le dispositif informatique avant un lancement du composant de commande de déroulement respectif et/ou sont adaptées conformément à la directive de sécurité,
- les composants de commande de déroulement sont respectivement, conformément aux informations de configuration contrôlées et/ou adaptées, chargés dans l'environnement de commande de déroulement et y sont exécutés.

2. Procédé suivant la revendication 1,
dans lequel, à l'aide des informations de configuration contrôlées et/ou adaptées, on établit ou on référencie respectivement un profil d'autorisation pour un accès aux justifications et/ou aux ressources exigées et dans lequel par les profils d'autorisation, en ce qui concerne les justifications et/ou les ressources exigées, on fixe respectivement des opérations admissibles et/ou inadmissibles dans le dispositif informatique.

3. Procédé suivant l'une des revendications 1 ou 2,
dans lequel on ne donne au moins pas d'accès à l'appareil d'automatisation et/ou pas d'accès au réseau de communication aux composants de commande de déroulement, sans contrôle des informations de configuration respectives, par rapport à la directive de sécurité mise en mémoire dans l'appareil d'automatisation.

4. Procédé suivant l'une des revendications 1 à 3,
dans lequel les autorisations et/ou ressources exigées comprennent des validations de système de fichier et/ou de firewall.

5. Procédé suivant l'une des revendications 1 à 4,
dans lequel on utilise les informations de configuration contrôlées et/ou adaptées respectivement pour une charge et/ou une exécution des composants de commande de déroulement respectifs.

6. Procédé suivant l'une des revendications 1 à 5,
dans lequel les composants de commande de déroulement sont des conteneurs logiciels, des codes d'octet WebAssembly ou Java et dans lequel l'environnement de commande de déroulement est un conteneur d'environnement de temps de marche, un environnement de temps de marche WebAssembly ou une machine virtuelle Java.

7. Procédé suivant l'une des revendications 1 à 6,
dans lequel un système (300) d'orchestration associé à un utilisateur de l'appareil d'automatisation détecte une application, une extinction et/ou une modification des composants (131-133) de commande de déroulement et enregistre les applications de commande avec leur statut d'exécution respectif, et dans lequel l'application d'extinction et/ou la modification des composants de commande de déroulement comprend respectivement une allocation ou une validation de ressources du dispositif (100) informatique.

8. Procédé suivant l'une des revendications 1 à 7,
dans lequel au moyen des applications de commande, on met à disposition et/ou on commande des fonctions de l'appareil d'automatisation.

9. Procédé suivant l'une des revendications 1 à 8,
dans lequel la preuve d'autorisation associée au fabricant de l'appareil d'automatisation comprend au moins une clé cryptographique en matériel et/ou en logiciel.

10. Procédé suivant l'une des revendications 1 à 9,
dans lequel, pour une charge et/ou une exécution d'informations de configuration utilisées par des composants de commande de déroulement après une modification des directives de sécurité mises en mémoire dans l'appareil d'automatisation, on les contrôle par rapport aux modifications et/ou on les adapte conformément aux modifications et dans lequel avant la modification, on arrête sélectivement des composants de commande de déroulement concernés par la directive de sécurité et on les contrôle à nouveau avec elle et/ou on relance des informations de configuration adaptées.

11. Système pour effectuer un procédé suivant l'une des revendications 1 à 10, comprenant
- au moins un appareil (200) d'automatisation,
- au moins un dispositif (100) informatique relié à l'appareil d'automatisation,
- un environnement (112) de commande de déroulement installé sur le dispositif informatique,
- une directive (201) de sécurité mise en mémoire dans l'appareil d'automatisation, qui n'est modifiée qu'après une authentification couronnée de succès à l'aide d'une preuve (10) d'autorisation associée à un fabricant (1) de l'appareil d'automatisation,
- dans lequel le dispositif informatique est conformé et agencé pour mettre des applications de commande à disposition de l'appareil d'automatisation, au moyen de composants (131-133) de commande de déroulement, qui sont chargés dans l'environnement de commande de déroulement et y sont exécutés, dans lequel, pour les composants de commande de déroulement, sont prescrites respectivement des informations (312, 322, 332) de configuration, qui comprennent des autorisations et/ou des ressources exigées pour les composants respectifs de commande de déroulement,
- dans lequel les composants (131-133) de commande de déroulement sont conformés et agencés pour se dérouler de manière isolée les uns des autres à l'intérieur de l'environnement (112) de commande de déroulement et pour utiliser conjointement un noyau de système de fonctionnement du dispositif (100) informatique, dans lequel l'environnement de commande de déroulement est installé sur un système (111) de fonctionnement du dispositif informatique,
- dans lequel le dispositif informatique est conformé et agencé, en outre, pour contrôler par rapport à la directive de sécurité des informations de configuration avant un lancement du composant de commande de déroulement respectif et/ou les adapter conformément à la directive de sécurité,
- dans lequel le dispositif informatique est conformé et agencé, en outre, pour charger dans l'environnement de commande de déroulement les composants de commande de déroulement conformément respectivement aux informations de configuration contrôlées et/ou adaptées et les y exécuter.

12. Programme de commande pour effectuer un procédé suivant l'une des revendications 1 à 10, dans lequel le programme de commande est chargé dans une mémoire de travail d'un dispositif informatique ainsi que traité par un processeur du dispositif informatique et a au moins un code, dont l'exécution
- met, au moyen de composants (131-133) de commande de déroulement, à disposition d'un appareil (200) d'automatisation relié au dispositif (100) informatique, des applications de commande, qui sont chargées dans un environnement (112) de commande de déroulement installé sur le dispositif informatique et y sont exécutées, dans lequel il est prévu pour les composants de commande de déroulement respectivement des informations (312, 322, 332) de configuration, qui comprennent au moins les autorisations et/ou ressources exigées pour les composants de commande de déroulement respectifs,
- les composants (131-133) de commande de déroulement se déroulent de manière isolée les uns des autres à l'intérieur de l'environnement (112) de commande de déroulement et utilisent conjointement un noyau de système de fonctionnement du dispositif (100) informatique, dans lequel l'environnement de commande de déroulement est installé sur un système (111) de fonctionnement du dispositif informatique,
- les informations de configuration sont, par le dispositif informatique, avant un lancement du composant de commande de déroulement respectif, contrôlées par rapport à une directive (201) de sécurité mise en mémoire dans l'appareil d'automatisation et/ou adaptées conformément à la directive de sécurité, dans lequel la directive de sécurité n'est modifiée qu'après une authentification couronnée de succès, à l'aide d'une preuve (10) d'autorisation associée à un fabricant (1) de l'appareil d'automatisation,
- les composants de commande de déroulement sont respectivement, conformément aux informations de configuration contrôlées et/ou adaptées, chargés dans l'environnement de commande de déroulement et y sont exécutés,
tandis que
le programme de commande se déroule dans le dispositif informatique.
